# EUROPEAN PATENT SPECIFICATION

(11) **EP 1 927 532 B1**
(45) Date of publication and mention of the grant of the patent: **11.11.2009**
(21) Application number: 06125280.5
(22) Date of filing: 01.12.2006
(51) Int. Cl.: B62D 21/15, B62D 25/08, B62D 25/20

(54) **A lower frame rail for a vehicle**
Untere Längsträger für ein Fahrzeug
Longeron abaissé de cadre de châssis de véhicule

(43) Date of publication of application: 04.06.2008
(73) Proprietor: Ford Global Technologies, LLC, Dearborn, MI 48126 (US); Vari-Form, Inc., Warren MI 48089-2614 (US)
(72) Inventor: Caliskan, Ari, Canton, MI 48187 (US); Gericke, Dean, Brighton, MI 48116 (US)
(74) Representative: Messulam, Alec Moses

(56) References cited:
- WO-A-94/19227
- DE-A1- 4 208 700
- DE-A1- 19 544 424
- DE-A1-102004 019 089
- FR-A1- 2 702 710
- GB-A- 2 386 589

## Description

This invention relates to a lower frame mid-rail for an automotive vehicle and, more particularly, to a mid-rail assembly formed from a pair of side-by-side tubular members, which provide an enhanced support for the shock tower support member.

Lower frame mid-rails in an automotive vehicle support the central part of an automotive chassis and provide a cantilevered support for the rear bumper assembly. Conventionally, the rear bumper assembly would include a transverse bumper beam, lower frame rails and appropriate attachment brackets for connecting the bumper beam to the lower frame rails and the lower frame rails to the mid-rails. The rear shock tower support members are mounted on top of the mid-rails, conventionally in a cantilevered manner off of a single fabricated rail structure.

The structure of a lower frame mid-rail can vary significantly from manufacturer to manufacturer. As can be seen in U. S. Patent Publication No. 2004/0080188, filed by Masanori Igarashi, et al and published on April 29, 2004, the longitudinal frame rails are connected by a cross frame member with legs that straddle the shock absorber column. A bracket is placed over the leg to mount and support the shock absorber. In U. S. Patent No. 4,708,391, issued to Mitusou Nakano on November 24, 1987, the longitudinal frame rails are reinforced by a member that is located adjacent both longitudinal sides of the shock absorber spring.

U. S. Patent No. 5,411,311,issued to Roger Shimmell, et al on May 2, 1995, and assigned to Ford Motor Company, the front shock absorber towers are braced with a transverse member between the towers and members located between the cowl and the shock absorber towers. U. S. Patent No. 5,988,734, issued to Stephen Longo, et al on November 23, 1999, teaches a conventional bumper mounting configuration wherein the vehicle frame is reinforced by a central tunnel and reinforcing pads between the tunnel and the rails. Akira Nomura, in U. S. Patent No. 6,773,057, issued on August 10, 2004, teaches that the front shock strut tower can be supported on an apron, which is reinforced by members that extend between the longitudinally extending tubular members. DE 42 08 700 discloses side rails formed of two extruded members which diverge vertically and laterally, according to the preamble of claim 1.

It would be desirable to provide lower frame mid-rails for use in conjunction with a bumper and lower frame rail structure of an automobile that are particularly adaptable to manufacturing through hydroforming processes and which can be utilized to provide a stable support for the rear shock tower.

It is an object of this invention to overcome the aforementioned disadvantages of the known prior art by providing a lower frame mid-rail structure that is formed from a pair of tubular members. It is a further object of this invention to provide a dual tube lower frame mid-rail structure that is durable in construction, inexpensive to manufacture, simple to assemble and effective in use.

According to a first aspect of the invention there is provided a lower frame rail for an automotive vehicle, the lower frame rail comprising a pair of tubular members each of which has a height dimension greater than a width dimension, the tubular members being oriented to form a longitudinally extending portion with the tubular members being positioned laterally of one another, characterised in that the tubular members diverge from the longitudinally extending portion to separate with a lateral distance therebetween, a shock tower support member being affixed to top surfaces of the laterally spaced tubular members such that the shock tower support member has an interior support on one of the tubular members and an exterior support on the other of the tubular members.

The tubular members may be welded together along the longitudinally extending portion such that adjacent sides of the tubular members form a vertical web along the longitudinally extending portion.

One of the tubular members may be an interior tubular member and at least one cross frame member may be inserted into an interior sidewall of the interior tubular member and is affixed to the interior tubular member.

A second cross frame member may be inserted through openings formed in the interior sidewall and an exterior sidewall so that the second cross frame member can extend through the interior tubular member to engage an interior sidewall of an exterior tubular member, the second cross frame member being affixed to both the interior and exterior tubular members.

The cross frame members may be affixed to the interior tubular member where the interior tubular member is laterally spaced from the exterior tubular member.

Preferably, the interior and exterior tubular members may be formed by a hydroforming process.

The lower frame rail may forms part of a lower frame rail assembly for a rear-end portion of an automobile supporting a shock tower assembly and a rear bumper, and may be further characterised in that one of the tubular members is an interior tubular member having a height dimension substantially greater than a width dimension and the other of the tubular members is an exterior tubular member having height and width dimensions substantially equal to the interior tubular member, the interior and exterior tubular members being welded together to form a first longitudinally extending portion with adjacent sidewalls of the tubular members defining a generally vertically oriented internal web and diverge from the first longitudinally extending portion to form a divergent portion such that a lateral distance spaces the interior tubular member from the exterior tubular member and that a shock tower support member is welded to the interior and exterior tubular members where the tubular members diverge to provide separate interior and exterior support for the shock tower support member.

The shock tower support member may be a sheet metal stamping that is welded to top walls of the interior and exterior tubular members.

A plurality of cross frame members may be affixed to the interior tubular member along the divergent portion.

At least one of the cross frame members may pass through aligned openings in opposing side walls of the interior tubular member to engage the exterior tubular member.

Preferably, the tubular members may be formed through a hydroforming process which forms the aligned openings in the interior tubular member and an aligned opening in the exterior tubular member to permit the at least one cross frame member to be inserted into the exterior tubular member for welding therebetween.

The interior and exterior tubular members may converge to form a second longitudinally extending portion spaced from the first longitudinally extending portion.

The first longitudinally extending portion may be engagable with a rear bumper support for mounting the rear bumper rearwardly of the first longitudinally extending portion.

According to a second aspect of the invention there is provided a motor vehicle having an automotive frame corresponding to a rearward portion of the vehicle, the automotive frame comprising first and second laterally spaced lower frame rails in accordance with said first aspect of the invention supporting a shock tower assembly and a rear bumper characterised in that each of the lower frame rails is formed from an interior tubular member and an exterior tubular member oriented laterally from one another so that the two tubular members form a first longitudinally extending portion and are welded together along a seam between the tubular members to form an internal web, a divergent portion forwardly of the first longitudinally extending portion where the interior and exterior tubular members diverge to define a lateral distance therebetween and a second longitudinally extending portion forwardly of the divergent portion where the interior and exterior tubular portions are welded together and that a plurality of cross frame members interconnect the first and second lower frame rails between the corresponding divergent sections and that a support member of the shock tower assembly is welded to the interior and exterior tubular members at the respective divergent portions.

The longitudinally extending portions may include a generally vertically oriented internal web formed from adjacent side walls of the interior and exterior tubular members.

Each of the interior tubular members may be formed through a hydroforming process in which openings are formed in the side walls of the interior tubular member, the cross frame members being inserted into the openings to engage the interior tubular member and enhance a welding connection therebetween.

At least one of the cross frame members may pass through aligned openings in the opposing side walls of the interior tubular member to engage an aligned opening in the exterior tubular member, the at least one cross member being welded to both the interior tubular member and the exterior tubular member.

It is an advantage of this invention that the geometrical configuration of the lower frame mid-rails can be sized to correspond to a bumper beam that integrally incorporates the bumper beam and lower frame mounting rails.

It is still another advantage of this invention that the two tubular members of the lower frame mid-rails can be welded together at a longitudinally extend portion for mounting with the bumper support structure.

It is a further advantage of this invention that the shock tower support stamping can have support on laterally spaced frame members to provide a stable support for the rear shock tower.

The invention will now be described by way of example with reference to the accompanying drawing of which:-
Fig.1 is a top plan view of the single component bumper and lower frame rail structure to form the rear frame structure for an automobile incorporating the principles of the instant invention;
Fig.2 is a side elevational view of the bumper and lower frame rail structure depicted in Fig. 1;
Fig.3 is an enlarged partial perspective view of the bumper structure incorporating the principles of the instant invention;
Fig.4 is an enlarged perspective detail view of the reduced terminal end portion of the longitudinally extending mounting legs of the bumper structure to be inserted into the lower frame rails, as is depicted in Figs. 1 and 2;
Fig.5 is a top plan view of the reduced terminal end portion of the mounting leg structure being inserted into the dual tube lower frame rails as depicted in Figs. 1 and 2;
Fig.6 is a bottom perspective view of the bumper and lower frame rail structure shown in Fig. 1; and
Fig.7 is an enlarged bottom perspective view of the divergent zone of the lower frame rail assembly showing the connection of the cross frame members and the shock tower support member.

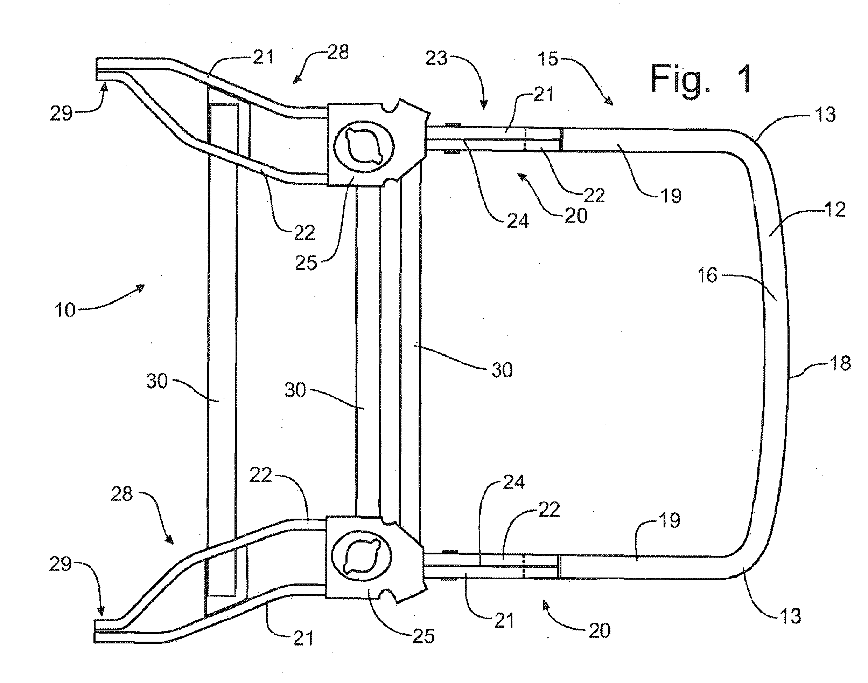

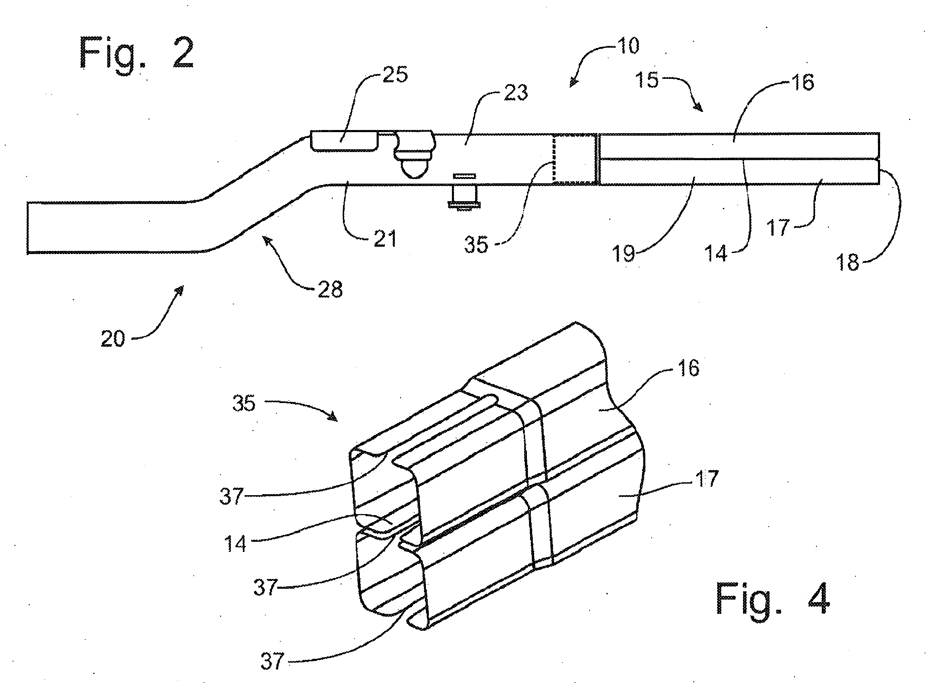

Referring to Figs.1 and 2, a bumper and lower frame rail, including a shock tower support, forming a part of the rear end of an automobile frame and incorporating the principles of the instant invention, can best be seen.

The frame 10 of the automobile is preferably formed from several hydroformed tubular members. Such tubular members can be spot-welded and/or MIG-welded to form an integral frame assembly for the rear end of a vehicle.

Hydroforming is a process by which a standard tubular stock member is placed into a form shaped to correspond to the particular member to be formed and to correspond to the particular section required for the frame design. A liquid is then introduced into the interior of the tubular stock and pressurized until the tubular stock expands to assume the shape defined by the configured form. The expanded and re-shaped tubular stock now has a substantially different shape. By forming cut-outs and other access openings into the re-shaped tubular member, spot-welding electrodes can gain access to opposing adjacent sides to create a weld bond between juxtaposed members. In this manner, a frame, as an example, for an automobile can be created using in large part hydroformed tubular members. One skilled in the art will readily recognize that some MIG-welding will be required in areas where access holes are detrimental to the integrity of the frame structure. Preferably, such MIG-welding processes are performed at a sub-assembly or at a supplier level.

In the automotive rear end frame 10 depicted in the drawings, the bumper 15 is formed from welded hydroformed members. Similarly, the lower frame rails 20 which connect to the bumper 15 and project forwardly therefrom are formed from tubular hydroformed members. The shock tower support member 25 is preferably a stamping that is formed into a specific shape and mounted on the lower frame rails 20, as is described in greater detail below.

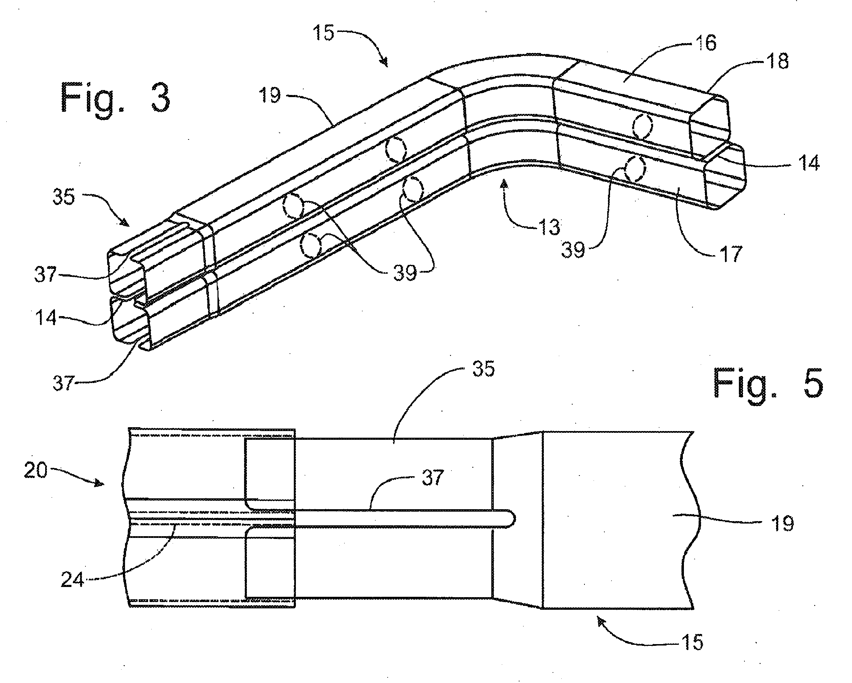

The lower frame rail 20 is formed from two hydroformed tubular members 21, 22 that have corresponding first longitudinally extending portions 23 that are welded together at the rearwardmost end of the members 21, 22 preferably by MIG-welding along the generally horizontal seam between the members 21, 22. As is best seen in Figs.1 and 5, the lower frame rail structure 20 has an internal vertical web 24 formed from the adjacent sidewalls of the two tubular members 21, 22, oriented as an exterior member 21 and an interior member 22. The internal web 24 substantially increases the strength and stiffness of the lower frame rail 20, compared to a conventional tubular member.

The longitudinally extending portions 23 are positioned for connection to the bumper 15, as will be described in greater detail below. Forwardly of the longitudinally extending portions 23, the two tubular members 21, 22 diverge to define a divergent portion 28 to provide a lateral spacing between the two members 21, 22. At this point of divergence, the shock tower support 25 is affixed, preferably by welding, to the top of the two tubular members 21, 22. The tubular members 21, 22 converge into a second longitudinally extending portion 29 forward of said divergent portion 28.

Unlike conventional shock tower stampings, the shock tower support member 25 is adequately supported both inboard and outboard on the laterally spaced members 21, 22 to provide a stable foundation for the shock tower (not shown). The shock tower support stamping 25 transfers road loads directly to the frame 10 and also provides sectional stability for any rear impact loads that might be encountered. This design results in a stiffer, stronger, yet lighter joint than is known in the prior art.

To facilitate the use of spot welding techniques, the tubular members 21, 22 can be formed with appropriate access openings (not shown) in the sidewalls for passage of a welding electrode. Similarly, cross frame members 30 can be welded between the opposing sides of the lower frame rails 20 to span the lateral distance across the vehicle frame 10. The cross frame members 30 can be inserted into appropriate openings 27 in the sidewalls of the tubular members 21, 22 to permit the passage of the cross frame members 30 internally into the interior tubular member 22 to enable the cross frame members 30 to be welded directly to the interior tubular member 22.

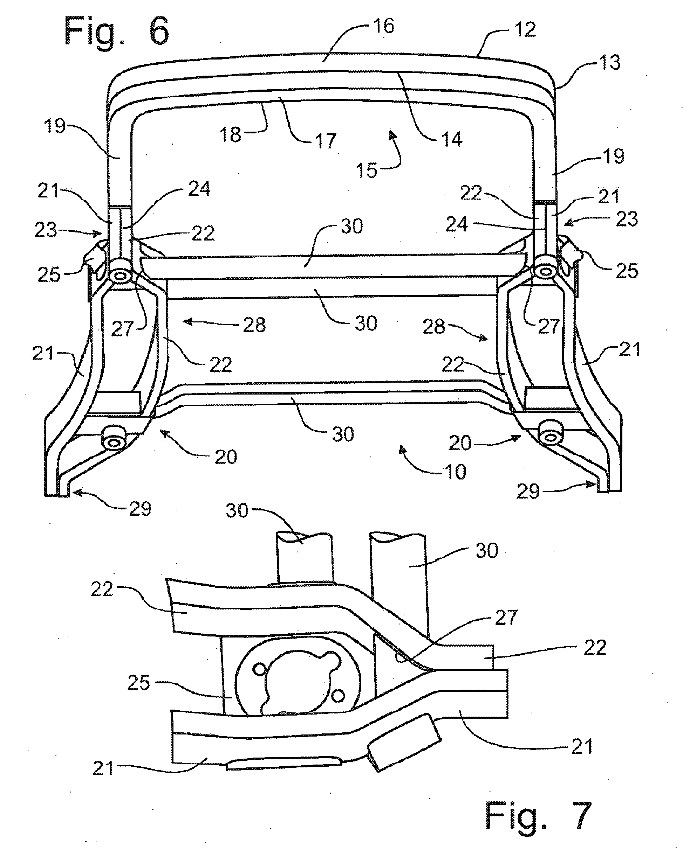

Preferably, as is best seen in Fig. 6, at least one of the cross frame members 30 adjacent the shock tower support 25 will pass through appropriate openings 27 in the interior tubular member 22 to engage the exterior tubular member 21 to permit welding between both members 21, 22 and the cross frame member 30. Such fabrication will add cross-vehicle stiffness to the frame 10, as well as provide a robust joint at the shock tower support 25. Preferably, the interior and exterior tubular members 21, 22 converge so that the lower frame rail 20 will extend forwardly with a central vertical web 24, as is shown with respect to the rearward longitudinally extending portions 23.

The bumper 15 can also be constructed from two hydroformed members 16, 17, with the upper tubular member 16 being located on top of the lower tubular member 17. Preferably both tubular bumper members 16, 17 are shaped substantially identically with a rearwardly positioned bight portion 18 and opposing mounting legs 19. The two tubular members 16, 17 can be MIG-welded along the generally horizontally extending seam therebetween to form a dual-celled bumper 15. Formation of the tubular members through the hydroforming process permits the introduction of deformation triggers 39, i.e. fold points to direct the deformation of the bumper in a prescribed manner when encountering an impact load.

This bumper 15 not only has the transversely oriented bight portion 18 forming the laterally extending rear bumper beam 12, but the integrally formed longitudinally extending mounting legs 19 provide the function of mounting the bumper beam 12 to the lower frame rails 20. A curved transition portion 13 preferably separates the transverse bight portion 18 from the longitudinal mounting legs 19. In conventional bumper design, the bumper beam, mounting rails, and attachment brackets are separate parts that are assembled to form the bumper structure. The formation of the bumper 15 according to the principles of the instant invention substantially reduces the number of parts required. With the two tubular members 16, 17 being welded together in a vertical orientation, the resultant structure has a horizontally oriented internal web 14 that enhances strength and stiffness for the bumper structure 15.

One of ordinary skill in the art will readily realize that the bumper 15 could also be formed through a roll-forming process in which the upper and lower cells of the bumper beam 15 would be separated by a horizontally oriented internal web 14. While the formation of the tubular members 16, 17 through the hydroforming process enables the tubular members 16, 17 to have triggers 39 formed therein during the formation process, the crash triggers 39 would have to be formed in the bumper by a separate processing step if the bumper 15 were manufactured through the roll-forming process.

Referring particularly to Figs.3 to 5, the forward ends of the mounting legs 19 are formed to mate with the dual tube lower frame rails 20. Each tubular member 16, 17 is formed with a reduced-sized terminal end 35 that can fit between the interior and exterior sidewalls of the lower frame rails 20, whereas the remainder of the mounting legs 19 are formed to correspond geometrically with the longitudinally extending portions 23 of the lower frame rails 20. As a result, the insertion of the reduced-sized terminal end 35 into the rearward ends of the lower frame rails 20 results in a generally uniformly shaped frame 10 with the overall width and depth of the bumper structure 15 being substantially equal to the overall width and depth of the lower frame rails 20.

To accommodate the interference between the horizontal internal web 14 of the mounting legs 19 and the vertical internal web 24 of the longitudinally extending portions 23 of the lower frame rails 20, the reduced-size terminal end 35 is formed with a slot 37 into the top and bottom walls of both of the upper and lower tubular members 16, 17. When the reduced-size ends 35 of the mounting legs 19 are inserted into the lower frame rails 20, the vertical internal web 24 slides into the aligned slots 37.

Therefore in summary, the invention provides in at least one embodiment a lower frame mid-rail structure for an automotive vehicle that is formed from a pair of tubular members manufactured through a hydroforming process. The two tubular members are welded together in a longitudinally extending portion to provide support for the mounting structure of a bumper assembly. The junction of the two tubular members creates a lower frame mid-rail cross-section that has a generally vertical internal web to strengthen and stiffen the mid-rail structure. The two tubular members laterally diverge from one another in a divergent zone in which the laterally spaced tubular members provide a stable interior and exterior support for a shock tower support member to be affixed or welded to the top of the tubular members. The hydroforming process can form openings in the sidewalls of the tubular members to permit passage of cross frame members to enhance the welding of the cross frame members to the mid-rail structure.

## Claims

1. A lower frame rail for an automotive vehicle, the lower frame rail (20) comprising a pair of tubular members (21, 22) each of which has a height dimension greater than a width dimension, the tubular members (21, 22) being oriented to form a longitudinally extending portion (23) with the tubular members (21, 22) being positioned laterally adjacent of one another,
**characterised in that** the tubular members (21, 22) diverge from the longitudinally extending portion (23) to separate with a lateral distance therebetween, where a shock tower support member (25) being affixed to top surfaces of the laterally spaced tubular members (21, 22) such that the shock tower support member (25) has an interior support on the interior tubular member (22) and an exterior support on the exterior tubular member (21).

2. A lower frame rail as claimed in Claim 1 wherein the tubular members (21, 22) are welded together along the longitudinally extending portion (23) such that adjacent sides of the tubular members form a vertical web (24) along the longitudinally extending portion (23).

3. A lower frame rail as claimed in claims 1 or 2, wherein one of the tubular members is an interior tubular member (22) and at least one cross frame member (30) is inserted into an interior sidewall of the interior tubular member (22) and is affixed to the interior tubular member (22).

4. A lower frame rail as claimed in Claim 3, wherein a second cross frame member (30) is inserted through openings formed in the interior sidewall and an exterior sidewall so that the second cross frame member (30) can extend through the interior tubular member (22) to engage an interior sidewall of an exterior tubular member (21), the second cross frame member (30) being affixed to both the interior and exterior tubular members (22 and 21).

5. A lower frame rail as claimed in Claim 4, wherein the cross frame members (30) are affixed to the interior tubular member (22) where the interior tubular member (22) is laterally spaced from the exterior tubular member (21).

6. A lower frame rail as claimed in claim 1, wherein the lower frame rail (20) forms part of a lower frame rail assembly for a rear-end portion of an automobile, the frame assembly supporting a shock tower assembly and a rear bumper (15), **characterised in that** one of the tubular members is an interior tubular member (22) having a height dimension substantially greater than a width dimension and the other of the tubular members is an exterior tubular member (21) having height and width dimensions substantially equal to the interior tubular member, the interior and exterior tubular members (22 and 21) being welded together to form a first longitudinally extending portion (23) with adjacent sidewalls of the tubular members defining a generally vertically oriented internal web (24) and diverge from the first longitudinally extending portion (23) to form a divergent portion (28) such that a lateral distance spaces the interior tubular member (22) from the exterior tubular member (21) and that a shock tower support member (25) is welded to the interior and exterior tubular members (22 and 21) where the tubular members (21, 22) diverge to provide separate interior and exterior support for the shock tower support member (25).

7. A lower frame rail as claimed in Claim 6, wherein the shock tower support member (25) is a sheet metal stamping that is welded to top walls of the interior and exterior tubular members (22 and 21).

8. A motor vehicle having an automotive frame corresponding to a rearward portion of the vehicle, the automotive frame comprising first and second laterally spaced lower frame rails (20) as claimed in any of claims 1 to 8 supporting a shock tower assembly and a rear bumper (15) **characterised in that** each of the lower frame rails (20) is formed from an interior tubular member (22) and an exterior tubular member (21) oriented laterally from one another so that the two tubular members (21, 22) form a first longitudinally extending portion (23) and are welded together along a seam between the tubular members (21, 22) to form an internal web (24), a divergent portion (28) forwardly of the first longitudinally extending portion (23) where the interior and exterior tubular members (22 and 21) diverge to define a lateral distance therebetween and a second longitudinally extending portion (29) forwardly of the divergent portion (28) where the interior and exterior tubular portions (22 and 21) are welded together and that a plurality of cross frame members (30) interconnect the first and second lower frame rails (20) between the corresponding divergent sections (28) and that a support member.(25) of the shock tower assembly is welded to the interior and exterior tubular members (22 and 21) at the respective divergent portions (28).

## Patentansprüche

1. Unterrahmenträger (20) für ein Kraftfahrzeug, umfassend: ein Paar rohrförmiger Elemente (21, 22), deren Höhenmaß jeweils größer als ihr Breitenmaß ist, wobei die rohrförmigen Elemente (21, 22) so ausgerichtet sind, dass sie einen sich längs erstreckenden Abschnitt (23) bilden, während die rohrförmigen Elemente (21, 22) seitlich nebeneinander angeordnet sind,
**dadurch gekennzeichnet, dass** die rohrförmigen Elemente (21, 22) vom sich längs erstreckenden Abschnitt (23) aus auseinanderstreben, um sich zu trennen und einen seitlichen Abstand zwischen sich herzustellen, wo ein Stoßdämpferdom-Stützelement (25) an den oberen Oberflächen der mit seitlichem Abstand angeordneten rohrförmigen Elemente (21, 22) befestigt ist, sodass das Stoßdämpferdom-Stützelement (25) eine innere Auflage am inneren rohrförmigen Element (22) und eine äußere Auflage am äußeren rohrförmigen Element (21) hat.

2. Unterrahmenträger gemäß Anspruch 1, wobei die rohrförmigen Elemente (21, 22) dem sich längs erstreckenden Abschnitt (23) entlang zusammengeschweißt sind, sodass nebeneinanderliegende Seiten der rohrförmigen Elemente dem sich längs erstreckenden Abschnitt (23) entlang einen senkrechten Steg (24) bilden.

3. Unterrahmenträger gemäß Anspruch 1 oder 2, wobei eines der rohrförmigen Elemente ein inneres rohrförmiges Element (22) ist und mindestens ein Rahmenquerträger (30) in eine innere Seitenwand des inneren rohrförmigen Elements (22) eingeführt wird und am inneren rohrförmigen Element (22) befestigt wird.

4. Unterrahmenträger gemäß Anspruch 3, wobei ein zweiter Rahmenquerträger (30) durch in der inneren Seitenwand und einer äußeren Seitenwand gebildete Öffnungen eingeführt wird, sodass der zweite Rahmenquerträger (30) sich durch das innere rohrförmige Element (22) hindurch erstrecken kann, um mit einer inneren Seitenwand eines äußeren rohrförmigen Elements (21) in Eingriff zu kommen, wobei der zweite Rahmenquerträger (30) an beiden rohrförmigen Elementen (22, 21), dem inneren und dem äußeren, befestigt ist.

5. Unterrahmenträger gemäß Anspruch 4, wobei die Rahmenquerträger (30) am inneren rohrförmigen Element (22) befestigt sind, wo das innere rohrförmige Element (22) einen seitlichen Abstand vom äußeren rohrförmigen Element (21) hat.

6. Unterrahmenträger gemäß Anspruch 1, wobei der Unterrahmenträger (20) Teil einer Unterrahmenträger-Baugruppe für einen Heck-Abschnitt eines Kraftfahrzeugs ist und die Rahmenbaugruppe eine Stoßdämpferdom-Baugruppe und einen hinteren Stoßfänger (15) trägt, **dadurch gekennzeichnet, dass** eines der rohrförmigen Elemente ein inneres rohrförmiges Element (22) mit einem deutlich größeren Höhenmaß als Breitenmaß ist und das andere rohrförmige Element ein äußeres rohrförmiges Element (21) mit Höhen- und Breitenmaßen ist, die im Wesentlichen denen des inneren rohrförmigen Elements gleichkommen, wobei das innere und das äußere rohrförmige Element (22 und 21) zusammengeschweißt sind, um einen ersten, sich längs erstreckenden Abschnitt (23) zu bilden, bei dem nebeneinanderliegende Seitenwände der rohrförmigen Elemente einen im Allgemeinen senkrecht ausgerichteten innenliegenden Steg (24) bilden und nach dem ersten, sich längs erstreckenden Abschnitt (23) auseinanderstreben, um einen auseinanderstrebenden Abschnitt (28) zu bilden, sodass das innere rohrförmige Element (22) durch einen seitlichen Abstand vom äußeren rohrförmigen Element (21) getrennt ist, und dass ein Stoßdämpferdom-Stützelement (25) dort, wo die rohrförmigen Elemente (21, 22) auseinanderstreben, um eine getrennte innere und äußeres Auflage für das Stoßdämpferdom-Stützelement (25) zu bilden, an das innere und das äußere rohrförmige Element (22 und 21) angeschweißt ist.

7. Unterrahmenträger gemäß Anspruch 6, wobei das Stoßdämpferdom-Stützelement (25) ein Blechprägeteil ist, das an die oberen Wände des inneren und äußeren rohrförmigen Elements (22 und 21) geschweißt ist.

8. Kraftfahrzeug mit einem Rahmen, der einem hinteren Teil des Fahrzeugs entspricht, wobei der Rahmen erste und zweite Unterrahmenträger (20) mit seitlichem Abstand gemäß einem der Ansprüche 1 bis 8 umfasst, die eine Stoßdämpferdom-Baugruppe und einen hinteren Stoßfänger (15) tragen, **dadurch gekennzeichnet, dass** jeder der Unterrahmenträger (20) aus einem inneren rohrförmigen Element (22) und einem äußeren rohrförmigen Element (21) gebildet wird, die seitlich so zueinander ausgerichtet sind, dass die beiden rohrförmigen Elemente (21, 22) einen ersten, sich längs erstreckenden Abschnitt (23) bilden und entlang einer Naht zwischen den rohrförmigen Elementen (21, 22) zusammengeschweißt sind, um einen innenliegenden Steg (24) zu bilden, einen auseinanderstrebenden Abschnitt (28), der vor dem ersten, sich längs erstreckenden Abschnitt (23) liegt und an dem das innere und das äußere rohrförmige Element (22 und 21) auseinanderstreben, um zwischen sich einen seitlichen Abstand zu bilden, und einen zweiten sich längs erstreckenden Abschnitt (29) vor dem auseinanderstrebenden Abschnitt (28), wo das innere und das äußere rohrförmige Element (22 und 21) zusammengeschweißt sind, und dass mehrere Rahmenquerträger (30) den ersten und den zweiten Unterrahmenträger (20) zwischen den jeweiligen auseinanderstrebenden Abschnitten (28) miteinander verbinden, und dass ein Stützelement (25) der Stoßdämpferdom-Baugruppe an das innere und an das äußere rohrförmige Element (22 und 21) der jeweiligen auseinanderstrebenden Abschnitte (28) geschweißt ist.

## Revendications

1. Longeron abaissé de cadre de châssis pour véhicule automobile, le longeron abaissé de cadre de châssis (20) comprenant une paire d'éléments tubulaires (21, 22) dont chacun a une dimension en hauteur qui est supérieure à une dimension en largeur, les éléments tubulaires (21, 22) étant orientés de façon à former une portion (23) s'étendant dans le plan longitudinal alors que les éléments tubulaires (21, 22) sont positionnés dans le plan latéral en position adjacente l'un de l'autre,
**caractérisé en ce que** les éléments tubulaires (21, 22) divergent de la portion (23) s'étendant dans le plan longitudinal pour qu'il y ait une distance latérale de séparation entre ces postes, où un élément support de colonne d'amortisseur (25) est fixé sur les surfaces supérieures des éléments tubulaires (21, 22) espacés dans le plan latéral, de sorte que l'élément support de colonne d'amortisseur (25) ait un support interne sur l'élément tubulaire interne (22) ainsi qu'un support externe sur l'élément tubulaire externe (21).

2. Longeron abaissé de cadre de châssis selon la revendication 1, les éléments tubulaires (21, 22) étant soudés ensemble le long de la portion (23) s'étendant dans le plan longitudinal de sorte que des côtés adjacents des éléments tubulaires constituent une poutrelle verticale (24) le long de la portion (23) s'étendant dans le plan longitudinal.

3. Longeron abaissé de cadre de châssis selon les revendications 1 ou 2, l'un des éléments tubulaires étant un élément tubulaire interne (22) et au moins un élément transversal (30) de cadre de châssis étant inséré dans une paroi interne de l'élément tubulaire interne (22) et étant fixé sur l'élément tubulaire interne (22).

4. Longeron abaissé de cadre de châssis selon la revendication 3, un deuxième élément transversal (30) de cadre de châssis étant inséré à travers des ouvertures ménagées dans la paroi interne et une paroi externe, de sorte que le deuxième élément transversal (30) de cadre de châssis peut s'étendre à travers l'élément tubulaire interne (22) afin de s'engager avec une paroi interne d'un élément tubulaire externe (21), le deuxième élément transversal (30) de cadre de châssis étant fixé à la fois sur les éléments tubulaires interne et externe (22 et 21).

5. Longeron abaissé de cadre de châssis selon la revendication 4, les éléments transversaux (30) de cadre de châssis étant fixés sur l'élément tubulaire interne (22) où l'élément tubulaire interne (22) est espacé dans le plan latéral par rapport à l'élément tubulaire externe (21).

6. Longeron abaissé de cadre de châssis selon la revendication 1, le longeron abaissé de cadre de châssis (20) faisant partie d'un ensemble longeron abaissé de cadre de châssis destiné à une portion d'extrémité arrière d'une automobile, l'ensemble cadre de châssis soutenant un ensemble colonne d'amortisseur et un bouclier arrière (15), **caractérisé en ce que** l'un des éléments tubulaires est un élément tubulaire interne (22) ayant une dimension en hauteur qui est sensiblement supérieure à une dimension en largeur, et que l'autre des éléments tubulaires est un élément tubulaire externe (21) ayant des dimensions en hauteur et en largeur qui sont sensiblement égales à l'élément tubulaire interne, les éléments tubulaires interne et externe (22 et 21) étant soudés ensemble afin de former une première portion (23) s'étendant dans le plan longitudinal, alors que les parois adjacentes des éléments tubulaires définissent une poutrelle interne (24) généralement orientée dans le plan vertical et divergent à partir de la première portion (23) s'étendant dans le plan longitudinal afin de former une portion divergente (28) de sorte qu'une distance latérale constitue un espace entre l'élément tubulaire interne (22) par rapport à l'élément tubulaire externe (21), et qu'un élément support de colonne d'amortisseur (25) est soudé sur les éléments tubulaires interne et externe (22 et 21), où les éléments tubulaires (21, 22) divergent afin de procurer un support individuel interne et externe à l'élément support de colonne d'amortisseur (25).

7. Longeron abaissé de cadre de châssis selon la revendication 6, l'élément support de colonne d'amortisseur (25) étant une pièce emboutie en tôle métallique laquelle est soudée sur les parois supérieures des éléments tubulaires interne et externe (22 et 21).

8. Véhicule à moteur doté d'un cadre de châssis automobile correspondant à une portion arrière du véhicule, le cadre de châssis automobile comprenant des premier et deuxième longerons abaissés de cadre de châssis (20) espacés dans le plan latéral, selon l'une quelconque des revendications 1 à 8, soutenant un ensemble colonne d'amortisseur et un bouclier arrière (15), **caractérisé en ce que** chacun des longerons abaissés de cadre de châssis (20) est constitué d'un élément tubulaire interne (22) et d'un élément tubulaire externe (21) lesquels sont orientés dans le plan latéral l'un par rapport à l'autre de sorte que les deux éléments tubulaires (21, 22) forment une première portion (23) s'étendant dans le plan longitudinal et sont soudés ensemble le long d'un cordon entre les éléments tubulaires (21, 22) afin de constituer une poutrelle interne (24), alors qu'une portion divergente (28) située devant la première portion (23) s'étendant dans le plan longitudinal où les éléments tubulaires interne et externe (22 et 21) divergent pour définir une distance latérale entre ces postes, et une deuxième portion (29) s'étendant dans le plan longitudinal située devant la portion divergente (28) où les éléments tubulaires interne et externe (22 et 21) sont soudés ensemble, et qu'une pluralité d'éléments transversaux (30) de cadre de châssis assurent l'interconnexion entre le premier et le deuxième longerons abaissés (20) de cadre de châssis entre les sections divergentes (28) correspondantes et qu'un élément support (25) de l'ensemble colonne d'amortisseur est soudé sur les éléments tubulaires interne et externe (22 et 21) au niveau des portions divergentes (28) respectives.
